# EUROPÄISCHE PATENTSCHRIFT

(11) **EP 3 795 495 B1**
(45) Veröffentlichungstag und Bekanntmachung des Hinweises auf die Patenterteilung: **02.11.2022**
(21) Anmeldenummer: 19198132.3
(22) Anmeldetag: 18.09.2019
(51) Int. Cl.: B65D 81/36, B65D 85/52, B65D 65/46, A01G 9/029

(54) **BEHÄLTER UND VERFAHREN ZUM NUTZEN EINES BEHÄLTERS**
CONTAINER AND METHOD FOR USING A CONTAINER
RÉCIPIENT ET PROCÉDÉ D'UTILISATION D'UN RÉCIPIENT

(43) Veröffentlichungstag der Anmeldung: 24.03.2021
(73) Patentinhaber: Tydda, Karolina-Maria Veronica, 7000 Chur (CH)
(72) Erfinder: Tydda, Karolina-Maria Veronica, 7000 Chur (CH)
(74) Vertreter: Wunderlich & Heim Patentanwälte Partnerschaftsgesellschaft mbB

(56) Entgegenhaltungen:
- EP-A1- 2 939 939
- WO-A1-2011/140650
- US-A1- 2012 318 687

## Beschreibung

Die Erfindung betrifft einen Behälter in Art einer Dose mit einem napfartigen ersten Dosenteil und einem napfartigen zweiten Dosenteil, wobei in einem geschlossenen Zustand das erste Dosenteil lösbar an dem zweiten Dosenteil angebracht ist, gemäß dem Oberbegriff des Anspruchs 1.

Die Erfindung betrifft weiterhin ein Verfahren zum Nutzen eines Behälters in der Art einer Dose als eine Verpackung für ein Produkt, welches in dem dosenartigen Behälter aufgenommen wird, welcher ein napfförmiges erstes Dosenteil und ein napfförmiges zweites Dosenteil aufweist, wobei in einem geschlossenen Zustand die Dosenteile lösbar miteinander verbunden sind, gemäß dem Oberbegriff es Anspruchs 12.

Dosenartige Behälter sind seit langem bekannt. Derartige Behälter weisen zwei napfartige Dosenteile auf, welche miteinander zum Umschließen eines Doseninnenraumes verbindbar sind. In dem Doseninnenraum kann ein Inhalt aufgenommen werden, welcher durch die umgebende Dose geschützt wird. Zum Entnehmen des Inhaltes können die beiden Dosenteile voneinander getrennt und geöffnet werden.

Insbesondere ist es bekannt, einen derartigen Behälter als Produktverpackung vorzusehen, so dass das Produkt für einen Transport, Verkauf und bis zum Verbrauch geschützt ist. Eine derartige Produktverpackung kann auch für eine ansprechende Produktpräsentation dienen, was sich positiv auf den Verkaufserfolg eines Produkte auswirken kann.

Trotz dieser Vorteile werden Produktverpackungen bei Verbrauchern in zunehmendem Maße aus Umweltgründen als unerwünscht oder nachteilig angesehen.

Ein gattungsgemäßer Behälter geht aus der EP 2939 939 A1 hervor. In einer Kappe eines Einwegtrinkbechers ist ein Deckel über eine Perforation lösbar und in das Unterteil einsetzbar angeordnet, um einen zweiten Boden im Unterteil zu bilden. Dieser kann dann als Blumentopf verwendet werden.

Aus der WO 2011/140650 A1 ist ein Einwegtrinkbecher bekannt, bei dem an einer Außenseite eine Tablette mit Pflanzensamen angeklebt ist. Nach Gebrauch kann die Tablette gelöst und in den Becher als ein Pflanztopf gelegt werden.

Die US 2012/0318687 A1 offenbart eine kastenartige Verpackung, in welcher ein Parfümbehälter aufgenommen ist und welche einen Samenträger aufweist.

Der Erfindung liegt die **Aufgabe** zugrunde, einen Behälter und ein Verfahren zum Nutzen eines Behälters auch für Pflanzen anzugeben, mit welchen effizient ein besonders hoher Nutzzweck erzielbar sind.

Die Aufgabe wird zum einen durch einen Behälter mit den Merkmalen des Anspruchs 1 und zum anderen mit einem Verfahren mit den Merkmalen des Anspruchs 12 gelöst. Bevorzugte Ausführungsformen der Erfindung sind in den abhängigen Ansprüchen angegeben.

Bei dem erfindungsgemäßen Behälter ist vorgesehen, dass das mindestens eine Dosenteil eine ringförmige Umfangswand und einen Deckel aufweist, welcher verschiebbar entlang einer Innenseite der ringförmigen Innenwand gelagert ist, und dass der Deckel von einer äußeren Endposition in Richtung auf das andere Dosenteil in eine innere Position verschiebbar ist, in welcher der Behälter topfförmig mit einem nach oben offenen Aufnahmeraum gebildet ist.

Eine Grundidee der Erfindung kann darin gesehen werden, einen Behälter mit einer mehrfachen Funktion vorzusehen, wobei der Behälter zunächst von einer anfänglichen Dosenform in eine Topfform umgestaltbar ist. Der Behälter kann so eine Mehrfachfunktion bieten.

Dies wird insbesondere dadurch erreicht, dass mindestens ein Dosenteil eine ringförmige Umfangswand mit einem darin verschiebbar gelagerten Deckel aufweist. Zur Umgestaltung des dosenförmigen Behälters kann der Deckel von einer äußeren Endposition entlang der ringförmigen Innenwand in Richtung auf das andere Dosenteil verschoben werden, wobei ein nach oben offener Aufnahmeraum gebildet wird. Der Deckel kann dabei bis zum Boden des gegenüberliegenden Dosenteils oder dazu beabstandet verschoben werden, so dass zwischen einem Boden des gegenüberliegenden Dosenteils und dem verschobenen Deckel in der Innenposition ein Raum verbleibt.

Ein derartiger Behälter kann somit sowohl als Dose oder als ein Topf mit einem nach oben offenen Aufnahmeraum eingesetzt werden.

Grundsätzlich kann der Behälter aus einem beliebigen Material bestehen, so auch aus Kunststoff oder einem Metall. Besonders bevorzugt ist es jedoch nach einer Weiterbildung der Erfindung, dass der Behälter aus einem wiederverwertbaren Material, insbesondere einem kompostierbaren Material gebildet ist. Das kompostierbare Material kann dabei insbesondere Papier, Pappe oder einem anderen aus Zellulosefasern bestehenden Material, ein biologischer oder biologisch abbaubarer Kunststoff, Holz oder Ähnliches sein. Das Material kann auch eine Kombination der vorgenannten Materialien sein, etwa eine Mischung aus biologischem Kunststoff mit natürlichen Fasermaterialien. Die Materialien können auch schichtweise aus unterschiedlichen Materialien aufgebaut sein. Insbesondere kann eine Beschichtung aus Wachs oder einem biologischen Lack vorgesehen werden.

Grundsätzlich kann der Behälter in einer beliebigen Form ausgebildet sein, etwa zylindrisch, quaderförmig, würfelförmig oder als ein Prisma mit einer beliebigen mehreckigen Grundfläche. Besonders bevorzugt ist es, dass eine Innenseite des ersten Dosenteils und eine Außenseite des zweiten Dosenteils gleich ausgebildet sind. Dies ermöglicht es, den verschiebbaren Deckel entlang der ringförmigen Umfangswand des einen Dosenteiles in geschlossenem Zustand auch über eine Verbindungsfuge zwischen beiden Dosenteilen in das zweite Dosenteil zu schieben. Der Deckel weist dabei die Querschnittsform des Innenraums des Behälters an der Innenseite auf.

Grundsätzlich können die beiden Dosenteile gleich oder unterschiedlich ausgebildet sein. Grundsätzlich kann der Deckel nur entlang der ringförmigen Wand des ersten Dosenteiles verschoben werden. Ein besonders großer Aufnahmeraum des topfförmig umgestalteten Behälters kann jedoch dadurch erzielt werden, dass der Deckel entlang der ringförmigen Umfangswand des ersten Dosenteiles bis in das zweite Dosenteil verschiebbar ist.

Nach einer Ausführungsvariante der Erfindung ist es dabei besonders zweckmäßig, dass in dem zweiten Dosenteil ein Anschlag angeordnet ist, bis zu welchem der Deckel verschiebbar ist und auf welchem der Deckel zum Bilden der Topfform aufsitzt. Grundsätzlich kann der Anschlag in dem zweiten Dosenteil der Boden des zweiten Dosenteiles sein. Als Anschlag können auch einzelne radial in den Innenraum vorstehende Vorsprünge ausgebildet sein. Besonders bevorzugt ist es, dass der Anschlag selbst ringförmig ausgebildet ist, so dass der Deckel entlang seines gesamten Umfangs an dem Anschlag zur Anlage kommt und zwischen Boden und Deckel ein Freiraum verbleibt.

Nach einer Weiterbildung der Erfindung ist es besonders vorteilhaft, dass der Deckel einen Außenrand aufweist, dessen Außenumfang mit der Innenseite der ringförmigen Umfangswand und/oder einer Innenseite des anderen Dosenteils eine Gleitpassung bildet. Der Deckel kann grundsätzlich plattenförmig ausgebildet sein, wobei die Dicke des Deckels ausreichend ist, um den gewünschten Außenrand zu bilden. Alternativ kann der Außenrand auch eine hochgestellte Außenwand am Deckel sein, so dass eine größere Anlage- oder Gleitfläche zwischen dem Außenrand und der ringförmigen Umfangswand erreicht wird. In der äußeren Endposition des Deckels kann dieser durch eine Verrastung oder eine leichte Verklebung fixiert sein. Bei Aufbringen einer bestimmten Kraft in Verschieberichtung auf den Deckel kann dann diese erste Fixierung überwunden werden, wobei anschließend der Deckel entlang der Innenseite der ringförmigen Umfangswand gleiten kann. Die Gleitpassung kann dabei so ausgelegt sein, dass diese Verschiebung manuell erfolgen kann. Zudem kann die Gleitpassung so ausgelegt sein, dass der Außenrand dicht mit der ringförmigen Umfangswand abschließt. An dem Außenrand und/oder der Innenseite der Dosenteile kann eine Beschichtung aus Wachs aufgebracht sein, wodurch ein gutes Gleiten bei gleichzeitiger guter Abdichteigenschaft erzielt wird. Der hochgestellte Außenrand am Deckel kann zum Boden des anderen Dosenteils gerichtet sein und so als ein Anschlag dienen, um zwischen Deckel und Boden in der inneren Position einen Freiraum zu bilden.

Grundsätzlich können die beiden Dosenteile in der geschlossenen Position beliebig miteinander verbunden sein, so dass ein Behälterraum durch die beiden Dosenteile umschlossen wird. Eine bevorzugte Ausführungsform der Erfindung besteht darin, dass die beiden Dosenteile mittels einer Verbindungseinrichtung verbunden sind, welche eine Schraubverbindung oder eine Schiebeverbindung aufweist. Hierfür sind entsprechende Verbindungsbereiche in grundsätzlich bekannter Weise einerseits an einem Außenumfangsbereich eines Dosenteils und andererseits an einem Innenumfangsbereich des anderen Dosenteiles ausgebildet.

Der Behälter kann grundsätzlich in vielfältiger Weise eingesetzt werden. Besonders bevorzugt ist es, dass dieser als eine Produktverpackung ausgebildet ist, wobei das Produkt in der Dose aufgenommen ist und nach Entnahme des Produkts der Behälter in die Topfform umgestaltbar ist. Somit kann ein Behälter in einer ersten Funktion als eine Produktverpackung dienen. Das Produkt kann ein beliebiges Produkt sein, etwa ein Kosmetikprodukt, ein Nahrungsmittel oder ein sonstiges Erzeugnis, welches einer Umverpackung bedarf. Nach der Entnahme des Produktes kann der Behälter einer zweiten Funktion zugeführt werden, indem der Behälter von der Dosenform zu einer Topfform umgestaltet wird. Die Topfform kann so zur Aufnahme oder Lagerzwecken dienen.

Dabei ist es nach der Erfindung besonders vorteilhaft, dass in einem der Dosenteile als ein Zusatzelement ein oder mehrere Pflanzensamen oder sonstige Pflanzenteile vorgesehen sind, aus welchen sich eine Pflanze in dem topfförmigen Behälter bilden kann. In dem Behälter ist also bereits selbst bei einer Verwendung als Produktverpackung schon bei der ersten Funktion mindestens ein Pflanzensamen oder ein Pflanzenteil angeordnet, aus welchen sich eine Pflanze entwickeln kann. Als Pflanzensame können insbesondere Blumen- oder Kräutersamen vorgesehen sein. Es können jedoch auch Samen für Stauden, Sträucher oder Bäume in dem Behälter vorgesehen werden. Neben Pflanzensamen können auch andere Pflanzentele vorgesehen sein, aus welchen sich eine Pflanze entwickeln kann, so etwa Wurzelteile, Rhizome, Sporen etc., aus welchen sich eine Pflanze entwickeln kann. Der Begriff der Pflanze im Sinne der Erfindung ist breit zu verstehen und umfasst auch Pilze, Moose, Flechten und ähnliche natürliche pflanzenartige Lebewesen.

Der Pflanzensamen oder das Pflanzenteil kann dabei in eine Wand oder einen Boden zumindest eines der Dosenteile eingearbeitet sein. Besonders bevorzugt ist es nach einer Weiterbildung der Erfindung, dass der Deckel einen Aufnahmebereich aufweist, in welchem das Zusatzelement, also Pflanzensamen oder das Pflanzenteil, angeordnet ist. Insbesondere kann der Deckel dabei mehrteilig oder mehrschichtig ausgebildet sein und insbesondere ein Pflanzpapier aufweisen. In dem Pflanzpapier kann bereits der Pflanzensamen oder das Pflanzenteil angeordnet sein. Grundsätzlich kann am Deckel auch ein Hohlraum zur Aufnahme des Zusatzelementes eingeformt sein, wobei der Aufnahmeraum abgedeckt ist.

Zum Wachsen der Pflanze kann Erde oder ein anderes Nährstoffsubstrat in den topfförmigen Behälter eingefüllt und mit Wasser befeuchtet werden. Alternativ oder ergänzend zu dem mindestens einen Pflanzensamen kann der Behälter, insbesondere der Deckel, aus einem sogenannten Beespaper, also einem Bienenpapier, bestehen oder mit jenem ausgestattet sein. Dieses weist zumindest Bestandteile, etwa Pollen und/oder Glucose, auf, welche unmittelbar oder nach Zerfall von Bienen als Nahrung aufnehmbar sind.

Für ein gutes Wachstum einer Pflanze in dem umgeformten Behälter ist es nach einer Weiterbildung der Erfindung vorgesehen, dass in zumindest einem der Dosenteile ein Nährstoffdepot für die zu bildende Pflanze angeordnet ist. Das Nährstoffdepot kann dabei in dem Deckel oder in dem gegenüberliegenden Dosenteil angeordnet sein. Insbesondere kann bei Ausbildung eines Freiraums zwischen dem Deckel und einem Boden des gegenüberliegenden Dosenteils bei einem Verschieben des Deckels in die innere Position in diesem Freiraum das Nährstoffdepot vorgesehen werden. Das Nährstoffdepot kann beispielsweise gepresster Torf, Kompost, ein Conjac-Schwamm, Pflanzenfasern oder andere Elemente sein, die Nährstoffe an eine Pflanze abgeben und Wasser aufnehmen können. Bei einem Torfpressling ist es bevorzugt, dass dieser in einem trockenen Zustand eine kleine kompakte Form aufweist, während dieser bei Zugabe von Wasser quellen kann. In einem derartigen Nährstoffdepot können zusätzlich oder alternativ Pflanzensamen oder Pflanzenteile vorgesehen sein. Ein Conjac-Schwamm kann dabei insbesondere bei Verwendung des Behälters als eine Produktverpackung für ein Kosmetikprodukt als ein Element zum Peelen des Gesichts ausgebildet sein.

Bei dem erfindungsgemäßen Verfahren ist vorgesehen, dass mindestens ein Dosenteil eine ringförmige Umfangswand und einen Deckel aufweist, welcher verschiebbar entlang einer Innenseite der ringförmigen Umfangswand gelagert ist, wobei nach Entnahme des Produktes der Deckel von einer äußeren Endposition in Richtung auf das andere Dosenteil in eine innere Position verschoben wird, wobei der Behälter topfförmig mit einem nach oben offenen Aufnahmeraum ausgebildet ist.

Das Verfahren kann insbesondere mit dem zuvor beschriebenen Behälter durchgeführt werden. Es können die dabei beschriebenen Vorteile erzielt werden.

Es ist erfindungsgemäß, dass der Deckel aus einem kompostierbaren Material gebildet und mit mindestens einen Pflanzensamen oder Pflanzenteil versehen wird, wobei nach dem Bilden der Topfform aus dem mindestens einen

Pflanzensamen oder dem Pflanzenteil eine Pflanze gezogen wird. Die Produktverpackung kann so in einfacher Weise in ein Gefäß umgeformt werden, in welchem Pflanzen gezogen werden können. Die Pflanzen können dabei mit der Zeit das kompostierbare Material verarbeiten, wobei der Deckel selbst als ein Nährstoffdepot dienen kann.

Besonders vorteilhaft ist es, dass der Behälter insgesamt aus einem wiederverwertbaren Material, insbesondere einem kompostierbaren Material, gebildet wird. Der Behälter kann so nicht nur CO₂-neutral entsorgt werden, sondern durch das Vorsehen einer Pflanze, die aus dem benutzten Behälter wächst, sogar zusätzlich CO₂ aus der Atmosphäre entziehen. Der Behälter und das damit vorgesehene Verfahren zum Nutzen des Behälters ist somit besonders umweltfreundlich.

Eine Innenseite des umgeformten Behälters kann dabei mit einem wasserabweisenden Wachs, insbesondere Bienenwachs, beschichtet sein, so dass der topfförmige Behälter eine gewisse Zeit als Pflanztopf oder Pflanzvase dienen kann. Zu einer vollständigen Umsetzung des kompostierbaren Materials kann der Behälter in einen Boden eingegraben werden, so dass er in der Regel nach einigen Monaten vollständig kompostiert und zumindest teilweise von der Pflanze als Pflanzennahrung umgesetzt wird.

Die Erfindung wird nachfolgend anhand eines bevorzugten Ausführungsbeispieles weiter beschrieben, welches stark schematisiert in den beigefügten Zeichnungen dargestellt ist.

In den Zeichnungen zeigen:
- Fig. 1: eine Querschnittsansicht durch einen erfindungsgemäßen Behälter in einem geöffneten Zustand;
- Fig. 2: eine Querschnittsansicht des Behälters von Fig. 1 in einem geschlossenen Zustand;
- Fig. 3: eine Querschnittsansicht des Behälters von Fig. 1 und Fig. 2 mit einem verschobenen Deckel zum Bilden einer Topfform; und
- Fig. 4: den Behälter von Fig. 3 mit einer darin gewachsenen Pflanze.

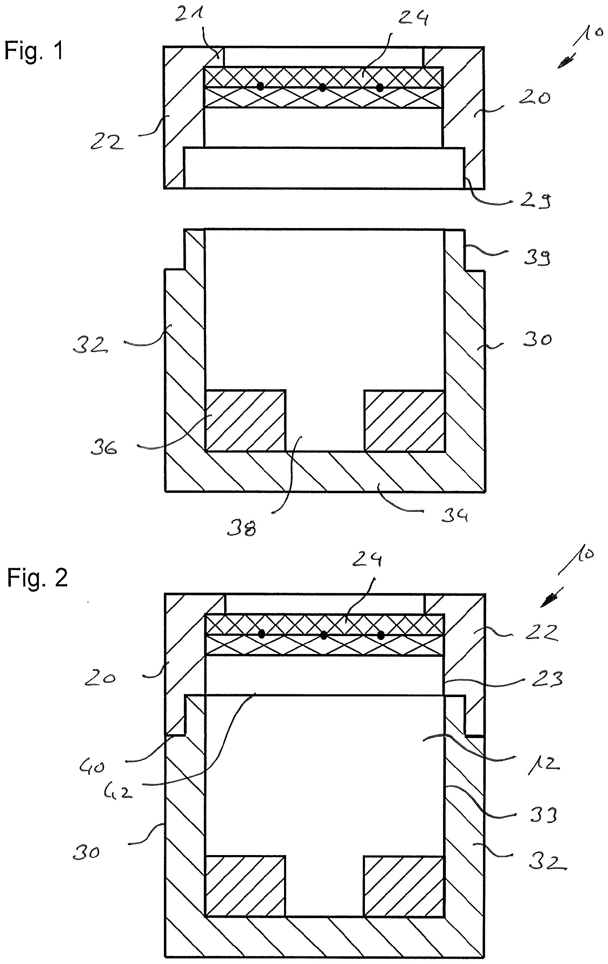

Fig. 1 zeigt einen erfindungsgemäßen dosenartigen Behälter 10 in einem geöffneten Zustand, wobei ein napfartiges erstes Dosenteil 20 als ein Dosenoberteil ausgebildet ist und ein napfartiges zweites Dosenteil 30 als ein Dosenunterteil geformt ist. Der Behälter 10 ist im dargestellten Ausführungsbeispiel zylindrisch ausgebildet, wobei der erfindungsgemäße Behälter 10 nicht auf diese Form beschränkt ist.

Der Behälter 10 gemäß Fig. 1 weist eine ringförmige Umfangswand 22 auf, welche an ihrer Oberseite einen radial nach innen vorstehenden Randvorsprung 21 umfasst. Dieser dient als ein Endanschlag für einen scheibenförmigen Deckel 24, welcher in Fig. 1 in seiner oberen Endposition dargestellt ist.

Das zweite Dosenteil 30 ist ebenfalls napfförmig mit einer ringförmigen Dosenwand 32 und einem Boden 34 ausgebildet. Auf dem Boden 34 ist ein Anschlag 36 für den Deckel 24 angeordnet. Im dargestellten Ausführungsbeispiel ist der Anschlag 36 ringförmig mit einem inneren Freiraum 38 ausgebildet.

Zum Schließen des Behälters 10 wird das erste Dosenteil 20 auf das zweite Dosenteil 30 aufgesetzt, wie anschaulich in Fig. 2 dargestellt ist. Hierbei wird ein Innenraum 12 von dem Behälter 10 umschlossen.

Das erste Dosenteil 20 und das zweite Dosenteil 30 sind über eine Verbindungseinrichtung 40 lösbar miteinander verbunden, welche im dargestellten Ausführungsbeispiel eine Steck- oder Schiebeverbindung ist. Im Bereich einer Verbindungsfuge 42 weisen die gegenüberliegenden Kanten des ersten Dosenteils 20 und des zweiten Dosenteils 30 abgestufte Verbindungsbereiche 29 beziehungsweise 39 auf, welche zueinander mit einer leichten Press- oder Gleitpassung zum Bilden einer lösbaren Verbindung zwischen den beiden Dosenteilen 20, 30 ausgebildet sind.

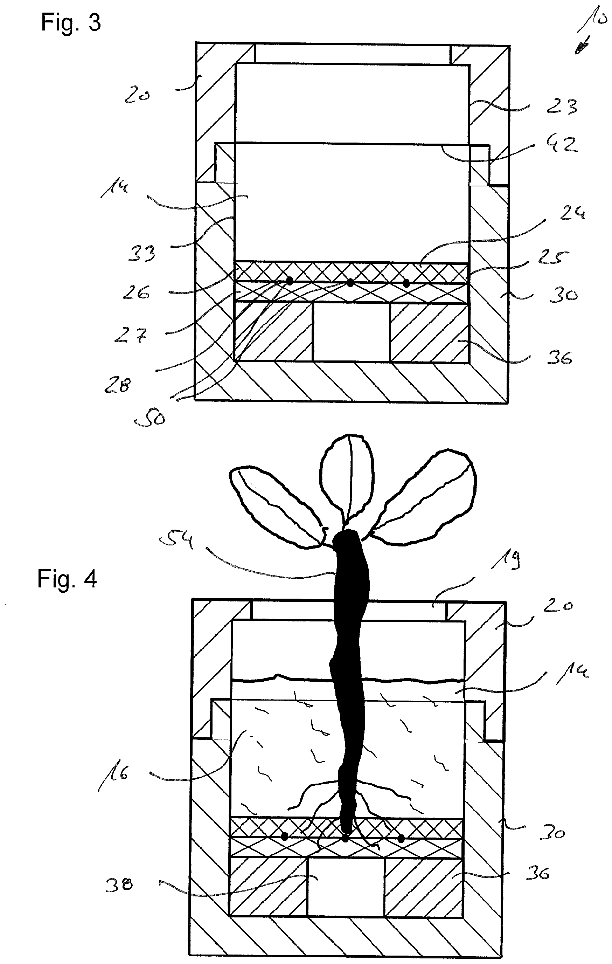

Der Behälter 10 kann als eine Produktverpackung ausgebildet sein, wobei in dem Innenraum 12 ein nicht dargestelltes Produkt angeordnet ist. Nach Entnahme des Produktes aus dem Innenraum 12 kann der Behälter 10 nach der Erfindung zu einer Topfform umgeformt werden, welche anschaulich in Fig. 3 dargestellt ist. Hierzu kann der verschiebbar gelagerte Deckel 24 von seiner oberen Endposition gemäß den Figuren 1 und 2 entlang einer ersten Innenseite 23 des ersten Dosenteils 20 über die Verbindungsfüge 42 und entlang einer zweiten Innenseite 33 des zweiten Dosenteiles 30 bis auf den ringförmigen Anschlag 36 in dem zweiten Dosenteil 30 geschoben werden.

Die beiden Innenseiten 23, 33 der beiden Dosenteile 20, 30 sind mit dem gleichen Innendurchmesser ausgebildet. Dieser Innendurchmesser bildet mit einem Außendurchmesser am Außenrand 25 des Deckels 24 eine Gleitpassung. Die Innenseiten 23, 33 der beiden Dosenteile 20, 30 können mit einem Wachs beschichtet sein, welches einerseits eine Wasserabdichtung bei der Verwendung von Papier oder Pappe als Material für die Dosenteile 20, 30 bildet und andererseits für eine gewünschte Gleitreibung zum Außenrand 25 des Deckels 24 sorgt.

In dem dargestellten Ausführungsbeispiel weist der Deckel 24 eine erste Deckelschicht 26 und eine zweite Deckelschicht 27 auf. Zwischen der oberen ersten Deckelschicht 26 und der unteren zweiten Deckelschicht 27 ist ein Aufnahmebereich 28 gebildet, in welchem Pflanzensamen 50 als ein Zusatzelement in den Deckel 24 eingebracht sind. Die beiden Deckelschichten 26, 27 sind aus einem kompostierbaren Material gebildet, insbesondere aus Papier oder Pappe.

Nach Erreichen der Topfform gemäß Fig. 3 mit einem Aufnahmeraum 14 in dem Behälter 10 kann in den Aufnahmeraum 14 Erde 16 eingefüllt werden, wie anschaulich in Fig. 4 dargestellt ist. Das Einfüllen der Erde kann über eine obere Öffnung 19 erfolgen, welche durch Verschieben des Deckels 24 an einer Oberseite des ersten Dosenteiles 20 freigegeben worden ist. Zusätzlich kann in dem Freiraum 38 an dem ringförmigen Anschlag 36 ein Nährstoffdepot vorgesehen sein oder nachträglich eingebracht werden. Durch Befeuchten der eingefüllten Erde 16 kann sich aus dem eingebrachten mindestens einen Pflanzensamen 50 eine Pflanze 54 entwickeln, wie dies schematisch in Fig. 4 dargestellt ist.

Bei der bevorzugten Verwendung von kompostierbaren Materialien für alle Teile des Behälters 10 kann dieser nach einem ersten Anziehen der Pflanze 54 in einem Zimmer oder einem sonstigen Gebäude in das Freiland versetzt und insbesondere in den Boden eingegraben werden. Eine sich gebildete Pflanze 54 kann sich so im Freiland weiter entwickeln und zum umweltschonenden Abbau des Behälters 10 beitragen. Zugleich wird hierdurch CO₂ aus der Atmosphäre entzogen. Weiterhin kann die Pflanze 54 beispielsweise als eine Blühpflanze ausgewählt sein, so dass diese zusätzlich Nahrung für Insekten und insbesondere Bienen bieten kann.

Der erfindungsgemäße Behälter 10 ist somit besonders vielseitig und umweltschonend einsetzbar.

## Patentansprüche

1. Behälter in Art einer Dose mit
- einem napfartigen ersten Dosenteil (20) und
- einem napfartigen zweiten Dosenteil (30),
wobei in einem geschlossenen Zustand das erste Dosenteil (20) lösbar an dem zweiten Dosenteil (30) angebracht ist,
wobei
- das mindestens eine Dosenteil (20) eine ringförmige Umfangswand (22) und einen Deckel (24) aufweist, welcher verschiebbar entlang einer Innenseite (23) der ringförmigen Innenwand (22) ist, und
- der Deckel (24) von einer äußeren Endposition in Richtung auf das andere Dosenteil (30) in eine innere Position verschiebbar ist, in welcher der Behälter (10) topfförmig mit einem nach oben offenen Aufnahmeraum (14) gebildet ist,
**dadurch gekennzeichnet,**
- **dass** der Deckel (24) aus einem kompostierbaren Material gebildet ist, und einen oder mehrere Pflanzensamen (50) oder sonstige Pflanzenteile aufweist, aus welchen sich eine Pflanze (54) in dem topfförmigen Behälter (10) bilden kann.

2. Behälter nach Anspruch 1,
**dadurch gekennzeichnet,**
**dass** der Behälter (10) insgesamt aus einem wiederverwertbaren Material, insbesondere einem kompostierbaren Material, gebildet ist.

3. Behälter nach Anspruch 2,
**dadurch gekennzeichnet,**
**dass** das Material Papier, Pappe und/oder einen biologischen Kunststoff umfasst.

4. Behälter nach einem der Ansprüche 1 bis 3,
**dadurch gekennzeichnet,**
**dass** eine Innenseite (23) des ersten Dosenteils (20) und eine Innenseite (33) des zweiten Dosenteils (30) gleich ausgebildet sind.

5. Behälter nach einem der Ansprüche 1 bis 4,
**dadurch gekennzeichnet,**
**dass** der Deckel (24) entlang der ringförmigen Umfangswand (22) des ersten Dosenteils (20) bis in das zweite Dosenteil (30) verschiebbar ist.

6. Behälter nach Anspruch 5,
**dadurch gekennzeichnet,**
**dass** in dem zweiten Dosenteil (30) ein Anschlag (36) angeordnet ist, bis zu welchem der Deckel (24) verschiebbar ist und auf welchem der Deckel (24) zum Bilden der Topfform aufsitzt.

7. Behälter nach einem der Ansprüche 1 bis 6,
**dadurch gekennzeichnet,**
**dass** der Deckel (24) einen Außenrand (25) aufweist, dessen Außenumfang mit der Innenseite (23) der ringförmigen Umfangswand (22) und/oder einer Innenseite (33) des anderen Dosenteils (30) eine Gleitpassung bildet.

8. Behälter nach einem der Ansprüche 1 bis 7,
**dadurch gekennzeichnet,**
**dass** die beiden Dosenteile (20, 30) mittels einer Verbindungseinrichtung (40) verbunden sind, welche eine Schraubverbindung oder eine Schiebeverbindung aufweist.

9. Behälter nach einem der Ansprüche 1 bis 8,
**dadurch gekennzeichnet,**
**dass** dieser als eine Produktverpackung ausgebildet ist, wobei das Produkt in der Dose aufgenommen ist und nach Entnahme des Produkts der Behälter (10) in die Topfform umgestaltbar ist.

10. Behälter nach einem der Ansprüche 1 bis 9,
**dadurch gekennzeichnet,**
**dass** der Deckel (24) einen Aufnahmebereich (28) für den mindestens einen Pflanzensamen aufweist.

11. Behälter nach einem der Ansprüche 1 bis 10,
**dadurch gekennzeichnet,**
**dass** in zumindest einem der Dosenteile (20, 30) ein Nährstoffdepot für die zu bildende Pflanze angeordnet ist.

12. Verfahren zum Nutzen eines Behälters (10) in der Art einer Dose, insbesondere nach einem der Ansprüche 1 bis 11, als eine Verpackung für ein Produkt, welches in dem dosenartigen Behälter (10) aufgenommen wird, welcher ein napfförmiges erstes Dosenteil (20) und ein napfförmiges zweites Dosenteil (30) aufweist, wobei in einem geschlossenen Zustand die Dosenteile (20, 30) lösbar miteinander verbunden sind,
wobei mindestens ein Dosenteil (20) eine ringförmige Umfangswand (22) und einen Deckel (24) aufweist, welcher verschiebbar entlang einer Innenseite (23) der ringförmigen Umfangswand (22) ist, wobei nach Entnahme des Produktes der Deckel (24) von einer äußeren Endposition in Richtung auf das andere Dosenteil (30) in eine innere Position verschoben wird, wobei der Behälter (10) topfförmig mit einem nach oben offenen Aufnahmeraum (28) ausgebildet wird, **dadurch gekennzeichnet,**
**dass** der Deckel (24) aus einem kompostierbaren Material gebildet und mit mindestens einem Pflanzensamen (50) oder Pflanzenteil versehen wird, wobei nach dem Bilden der Topfform aus dem mindestens einen Pflanzensamen (50) oder dem Pflanzenteil eine Pflanze (54) gezogen wird.

13. Verfahren nach Anspruch 12,
**dadurch gekennzeichnet,**
**dass** der Behälter (10) insgesamt aus einem wiederverwertbaren Material, insbesondere einem kompostierbaren Material gebildet wird.

## Claims

1. Container of the can type having
- a cup-like first can part (20) and
- a cup-like second can part (30),
wherein in a closed state the first can part (20) is releasably attached to the second can part (30),
wherein
- the at least one can part (20) has a ring-shaped circumferential wall (22) and a cover (24) which is displaceable along an inner side (23) of the ring-shaped circumferential wall (22), and
- the cover (24) is displaceable from an outer end position in the direction of the other can part (30) into an inner position, in which the container (10) is formed in a pot-shaped manner with a receiving space (14) open towards the top,
**characterized in that**
- the cover (24) is formed of a compostable material and has one or several plant seeds (50) or other plant parts, from which a plant (54) can be formed in the pot-shaped container (10).

2. Container according to claim 1,
**characterized in that**
the container (10) is formed entirely of a reusable material, in particular a compostable material.

3. Container according to claim 2,
**characterized in that**
the material comprises paper, cardboard and/or a biological plastic.

4. Container according to any one of claims 1 to 3,
**characterized in that**
an inner side (23) of the first can part (20) and an inner side (33) of the second can part (30) are of identical design.

5. Container according to any one of claims 1 to 4,
**characterized in that**
the cover (24) is displaceable along the ring-shaped circumferential wall (22) of the first can part (20) as far as into the second can part (30).

6. Container according to claim 5,
**characterized in that**
in the second can part (30) a stop (36) is arranged, up to which the cover (24) is displaceable and on which the cover (24) rests to form the pot shape.

7. Container according to any one of claims 1 to 6,
**characterized in that**
the cover (24) has an outer edge (25), the outer circumference of which forms a sliding fit with the inner side (23) of the ring-shaped circumferential wall (22) and/or an inner side (33) of the other can part (30).

8. Container according to any one of claims 1 to 7,
**characterized in that**
the two can parts (20, 30) are connected by a connecting means (40) having a screw connection or a sliding connection.

9. Container according to any one of claims 1 to 8,
**characterized in that**
this is designed as a product packaging, wherein the product is received in the can and after removal of the product the container (10) can be redesigned to the pot shape.

10. Container according to any one of claims 1 to 9,
**characterized in that**
the cover (24) has a receiving region (28) for the at least one plant seed.

11. Container according to any one of claims 1 to 10,
**characterized in that**
in at least one of the can parts (20, 30) a nutrient depot is arranged for the plant to be formed.

12. Method for using a container (10) of the can type, in particular according to any one of claims 1 to 11, as a packaging for a product which is received in the can-like container (10) that has a cup-shaped first can part (20) and a cup-shaped second can-part (30), wherein in a closed state the can parts (20, 30) are releasably connected to each other,
wherein at least one can part (20) has a ring-shaped circumferential wall (22) and a cover (24) which is displaceable along an inner side (23) of the ring-shaped circumferential wall (22), wherein after removal of the product the cover (24) is displaced from an outer end position in the direction of the other can part (30) into an inner position, wherein the container (10) is designed in a pot-shaped manner with a receiving space (14) open towards the top,
**characterized in that**
the cover (24) is formed of a compostable material and provided with at least one plant seed (50) or plant part, wherein after forming the pot shape a plant (54) is cultivated from the at least one plant seed (50) or plant part.

13. Method according to claim 12,
**characterized in that**
the container (10) is formed entirely of a reusable material, in particular a compostable material.

## Revendications

1. Récipient de type boîte comportant :
- une première partie de boîte (20) de type cuvette et
- une deuxième partie de boîte (30) de type cuvette,
dans lequel dans un état fermé, la première partie de boîte (20) est montée de manière amovible sur la deuxième partie de boîte (30),
dans lequel
- l'au moins une partie de boîte (20) présente une paroi périphérique (22) annulaire et un couvercle (24) qui peut être déplacé le long d'un côté intérieur (23) de la paroi intérieure (22) annulaire, et
- le couvercle (24) peut être déplacé d'une position terminale extérieure en direction de l'autre partie de boîte (30) dans une position intérieure, dans laquelle le récipient (10) se présente en forme de pot avec un espace de réception (14) ouvert vers le haut,
**caractérisé en ce que**
- le couvercle (24) est formé en un matériau compostable, et présente une ou plusieurs graines de plante (50) ou autres parties de plantes, à partir desquelles une plante (54) peut se former dans le récipient (10) en forme de pot.

2. Récipient selon la revendication 1,
**caractérisé en ce que**
le récipient (10) est formé dans l'ensemble en un matériau recyclable, en particulier en un matériau compostable.

3. Récipient selon la revendication 2,
**caractérisé en ce que**
le matériau comporte du papier, du carton et/ou une matière synthétique biologique.

4. Récipient selon l'une des revendications 1 à 3,
**caractérisé en ce que**
un côté intérieur (23) de la première partie de boîte (20) et un côté intérieur (33) de la deuxième partie de boîte (30) sont conformés de manière identique.

5. Récipient selon l'une des revendications 1 à 4,
**caractérisé en ce que**
le couvercle (24) peut être déplacé le long de la paroi périphérique (22) annulaire de la première partie de boîte (20) jusque dans la deuxième partie de boîte (30).

6. Récipient selon la revendication 5,
**caractérisé en ce que**
une butée (36) est agencée dans la deuxième partie de boîte (30), jusqu'à laquelle le couvercle (24) peut être déplacé et sur laquelle le couvercle (24) repose pour réaliser la forme de pot.

7. Récipient selon l'une des revendications 1 à 6,
**caractérisé en ce que**
le couvercle (24) présente un bord extérieur (25), dont la périphérie extérieure forme avec le côté intérieur (23) de la paroi périphérique (22) annulaire et/ou un côté intérieur (33) de l'autre partie de boîte (30) un ajustement glissant.

8. Récipient selon l'une des revendications 1 à 7,
**caractérisé en ce que**
les deux parties de boîte (20, 30) sont reliées au moyen d'un dispositif de liaison (40) qui présente une liaison vissée ou une liaison coulissante.

9. Récipient selon l'une des revendications 1 à 8,
**caractérisé en ce que**
celui-ci est réalisé comme un emballage de produit, dans lequel le produit est logé dans la boîte et dans lequel après le retrait du produit le récipient (10) peut être transformé dans la forme de pot.

10. Récipient selon l'une des revendications 1 à 9,
**caractérisé en ce que**
le couvercle (24) présente une zone de réception (28) pour l'au moins une graine de plante.

11. Récipient selon l'une des revendications 1 à 10,
**caractérisé en ce que**
un dépôt de substance nutritive pour la plante à former est disposé dans au moins une des parties de boîte (20, 30).

12. Procédé pour une utilisation d'un récipient (10) du type boîte, en particulier selon l'une des revendications 1 à 11, comme un emballage pour un produit qui est logé dans le récipient (10) de type boîte qui présente une première partie de boîte (20) en forme de cuvette et une deuxième partie de boîte (30) en forme de cuvette, dans lequel dans un état fermé, les parties de boîte (20, 30) sont reliées entre elles de manière amovible,
dans lequel au moins une partie de boîte (20) présente une paroi périphérique (22) annulaire et un couvercle (24) qui peut être déplacé le long d'un côté intérieur (23) de la paroi périphérique (22) annulaire, dans lequel après le retrait du produit, le couvercle (24) est déplacé d'une position terminale extérieure en direction de l'autre partie de boîte (30) dans une position intérieure, dans lequel le récipient (10) se présente en forme de pot avec un espace de réception (28) ouvert vers le haut, **caractérisé en ce que**
le couvercle (24) est formé en un matériau compostable et est pourvu d'au moins une graine de plante (50) ou partie de plante, dans lequel après la réalisation de la forme de pot une plante (54) est tirée de l'au moins une graine de plante (50) ou de la partie de plante.

13. Procédé selon la revendication 12,
**caractérisé en ce que**
le récipient (10) est formé dans l'ensemble en un matériau recyclable, en particulier en un matériau compostable.
